# EUROPÄISCHE PATENTANMELDUNG

(11) **EP 1 338 399 A1**
(43) Veröffentlichungstag der Anmeldung: **27.08.2003**
(21) Anmeldenummer: 03003605.7
(22) Anmeldetag: 17.02.2003
(51) Int. Cl.: B29C 45/16

(54) **Mehrkomponentiges Spritzgussteil sowie Verfahren und Vorrichtung zu dessen Herstellung**

(30) Priorität: 20.02.2002 DE 10207064
(71) Anmelder: Demag Ergotech GmbH, 90571 Schwaig (DE)
(72) Erfinder: Seibold, Günther, 91126 Schwabach (DE); Bänsch, Klaus-Peter, 90542 Eckental (DE)
(74) Vertreter: Wilhelm, Ludwig, Dipl.-Phys.

(57) **Zusammenfassung**

Beschrieben wird ein mehrkomponentiges Spritzgußteil, umfassend einen spritzgegossenen Grundkörper (4) aus einer ersten Kunststoffkomponente sowie ein daran angespritztes Formteil (3) aus einer zweiten Kunststoffkomponente. Die Erfindung zeichnet sich dadurch aus, dass sich das angespritzte Formteil (3) zu einem ersten Teil auf einer ersten Seite und zu einem zweiten Teil auf einer zweiten Seite des Grundkörpers (4) befindet, und dass der Grundkörper (4) zwischen diesen beiden Seiten durchgehende Kanäle (32) aufweist, wobei die Kanäle (32) in den Bereichen aus dem Grundkörper (4) austreten, in denen sich die Teile des angespritzten Formteils (3) befinden und wobei die Kanäle (32) mit der zweiten Kunststoffkomponente gefüllt sind, so dass zwischen dem ersten Teil und dem zweiten Teil des angespritzten Formteils (3) eine Verbindung besteht. In einer bevorzugten Anwendung handelt es sich bei dem Grundkörper (4) um einen Eimerdeckel und bei dem angespritzten Formteil (3) um einen Dichtring aus einem Elastomer.

## Beschreibung

Die Erfindung betrifft ein mehrkomponentiges Spritzgußteil gemäß dem Oberbegriff von Patentanspruch 1 sowie ein Verfahren und eine Vorrichtung zur Herstellung eines solchen Spritzgußteils. Bevorzugtes Anwendungsgebiet der Erfindung ist die Herstellung von Deckeln für Behälter.

Es sind Deckel aus thermoplastischem Kunststoff bekannt, die an ihrer Unterseite im Bereich der Oberkante des Behälters einen Dichtring aus einem Elastomer besitzen. Mit solchen Deckeln können die Behälter aufgrund der elastischen Eigenschaften des Dichtrings mehrfach geöffnet und geschlossen werden, ohne dass der dichte Sitz des Deckels auf dem Behälter darunter leiden würde.

Werden mehrere solcher Behälter mit aufgesetztem Deckel übereinander gestapelt, können sie leicht gegeneinder verrutschen.

Der Erfindung liegt nun die Aufgabe zugrunde, ein mehrkomponentiges Spritzgußteil anzugeben, von dem mehrere so nebeneinander und übereinander stapelbar sind, dass die eigentlichen Spritzgußteile nicht in direktem Kontakt zueinander sind. Insbesondere liegt der Erfindung die Aufgabe zugrunde, mehrkomponentige Spritzgußteile anzugeben, die speziell beim Stapeln nicht so leicht gegeneinander verrutschen können. Eine spezielle Aufgabe der vorliegenden Erfindung liegt darin, einen Deckel für Behälter anzugeben, der es erlaubt, die Behälter rutschfest übereinander zu stapeln.

Die Lösung der allgemeinen Aufgabe erfolgt durch ein mehrkomponentiges Spritzgußteil mit den Merkmalen von Patentanspruch 1. Die Lösung der speziellen Aufgabe erfolgt durch ein mehrkomponentiges Spritzgußteil mit den Merkmalen von Patentanspruch 5.

Dadurch dass sich zu beiden Seiten eines Grundkörpers ein angespritztes Formteil befindet, kommen die Oberflächen des Grundkörpers nicht ohne weiteres in direkten Kontakt miteinander. Wenn zusätzlich, wie im Patentanspruch 4 angegeben, das angespritzte Formteil aus einem Elastomer besteht, können die Spritzgußteile beim Stapeln nicht mehr so leicht gegeneinander verrutschen. Die besonderen Vorteile der Erfindung kommen bei Deckeln für Behälter zum Tragen. Dadurch, dass unterhalb und oberhalb des Deckels ein Elastomerring vorgesehen ist, kann der Behälter zum einen dicht verschlossen werden und zum anderen können die Behälter rutschfest übereinander gestapelt werden, wenn der Behälterboden auf dem Elastomerring oberhalb des Deckels aufliegt.

Durch die spezielle Ausgetaltung des Grundkörpers mit durchgehenden Kanälen kann die zweite Komponente in einem einzigen Spritzschritt zu beiden Seiten des Grundkörpers angeformt werden, wenn das Einspritzen an den Stellen erfolgt, an denen die Kanäle aus dem Grundkörper austreten (Anspruch 6). Die Ausgestaltung gemäß dem Unteranspruch 7 hat den zusätzlichen Vorteil, dass zu beiden Seiten des Grundkörpers jeweils ein zusammenhängendes Teil der zweiten Komponente gebildet wird. Auf diese Weise kann bei der Herstellung eines Deckels für einen Behälter (Unteranspruch 8) ein durchgehender Dicht- und Stapelring angespritzt werden, wobei vorteilhafterweise im ersten Spritzschritt ein thermoplastischer Kunststoff (für den eigentlichen Deckel) und im zweiten Spritzschritt ein elastomerischer Kunststoff (für den Dicht- und Stapelring) eingespritzt wird.

Um erfindungsgemäß in einem einzigen zweiten Spritzschritt zu beiden Seiten des Grundkörpers ein weiteres Formteil anspritzen zu können, wird ein Spritzgießwerkzeug mit den Merkmalen von Patentanspruch 10 vorgeschlagen. In einer bevorzugten Ausführungsform wird ein Drehwerkzeug gemäß Patentanspruch 11 vorgeschlagen. Die Ausgestaltungen nach den Unteransprüchen 12 bis 15 sind speziell für die Herstellung von Deckeln für Behälter geeignet, beispielsweise für Eimerdeckel.

Nachfolgend soll die Erfindung anhand eines Ausführungsbeispiels und unter Bezugnahme auf die Figuren 1 bis 2b näher erläutert werden.
Es zeigen:
- Fig.1:: Eimer und Deckel mit angespritztem Dichtring;
- Fig. 2a:: Teil eines erfindungsgemäßen Spritzgießwerkzeugs im Querschnitt beim ersten Spritzschritt;
- Fig. 2b:: Teil eines erfindungsgemäßen Spritzgießwerkzeugs im Querschnitt beim zweiten Spritzschritt;

Die Erfindung soll zunächst anhand eines Spritzgießwerkzeugs zur Herstellung eines thermoplastischen Eimerdeckels mit einer angespritzten Elastomerdichtung beschrieben werden. Es versteht sich von selbst, dass die Erfindung nicht auf die Herstellung solcher Teile beschränkt ist, sondern auch für andere Formteile und andere Kunststoffverbunde geeignet ist, d.h. universell beim Mehrkomponenten- und Mehrfarbenspritzgießen brauchbar ist.

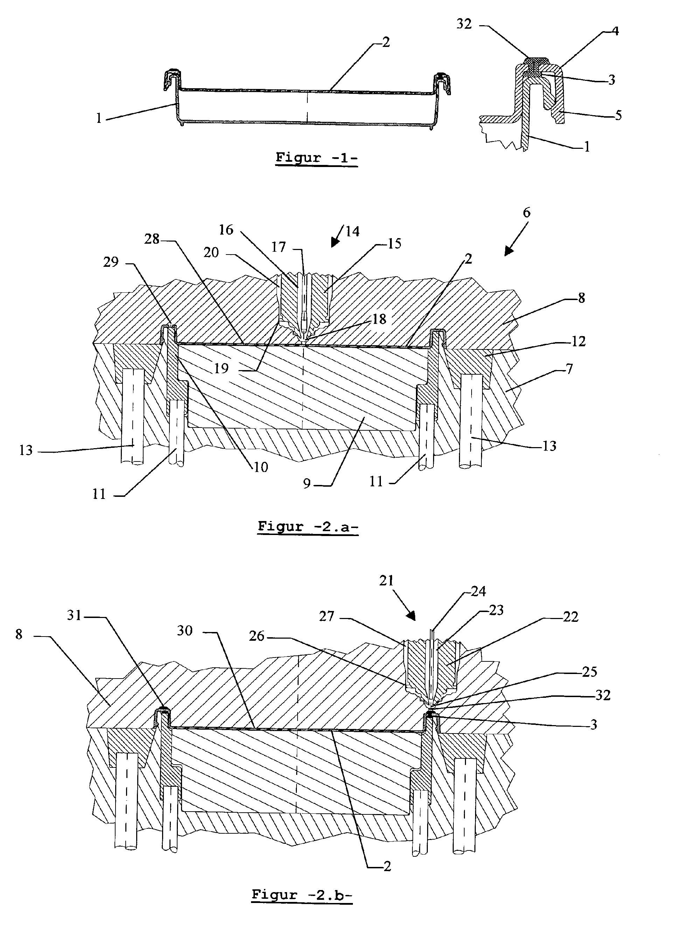

Figur 1 zeigt einen in herkömmlicher Weise spritzgegossenen Eimer 1 aus einem thermoplastischen Kunststoff und den darauf aufgesetzten mit einem erfindungsgemäßen Spritzgießwerkzeug hergestellten Eimerdeckel 2 mit einem daran angespritzten Dicht- und Stapelring 3 aus einem Elastomer. Der Eimerdeckel 2 besitzt an seinem äußeren Rand einen Abschnitt 4 mit im wesentlichen U-förmigem Querschnitt und einer Wulst 5 am unteren Ende dieses Abschnitts. Auf diese Weise sitzt der Eimerdeckel 2 dicht und fest auf dem Eimer 1. Geeignete Kombinationen für den Kunststoffverbund sind beispielsweise PP für den Eimerdeckel 2 und EPDM für den Dichtring 3 oder PA für den Eimerdeckel 2 und LSR für den Dichtring 3.

Die Figuren 2a und 2b zeigen jeweils eine Hälfte eines Drehwerkzeugs und zwar diejenige für den jeweiligen Spritzschritt. Gemäß Figur 2a weist das Spritzgießwerkzeug 6 eine erste, sich drehende untere Formhälfte 7, eine zweite, feststehendeobere obere Formhälfte 8, sowie in der unteren Formhälfte 7 ein Werkzeugmittelteil 9 sowie einen Kern 10 auf. Der Kern 10 und das Werkzeugmittelteil 9 sind entsprechend dem herzustellenden Formteil zylindersymmetrisch ausgebildet. Der Kern 10 ist der Kontur des Dicht- und Stapelrings 3 folgend hohlzylindrisch ausgebildet und umgibt das zylindrische Werkzeugmittel 9.
Über mehrere Stangen 11 ist der Kern 10 an eine hier nicht dargestellte Antriebseinrichtung angeschlossen, mit der der Kern 10 vor- und zurückgefahren werden kann. Desweiteren ist in der unteren Formhälfte 7 ein Abstreifer 12 vorgesehen, der über mehrere Stangen 13 an eine hier nicht dargestellte Antriebseinrichtung angeschlossen ist, mit der der Abstreifer 12 vor- und zurückgefahren werden kann, wobei beim Vorfahren ein fertiger Eimerdeckel 2 mit Dicht- und Stapelring 3 von der unteren Formhälfte 7 abgestreift und mittels eines Entnahmehandlings aus dem geöffneten Spritzgießwerkzeug entnommen werden kann.

In der oberen Formhälfte 8 befindet sich in der in Figur 2a gezeigten Werkzeughälfte zum Einspritzen der Thermoplastkomponente für den Eimerdeckel 2 im Zentrum der Formhälfte eine erste Nadelverschlussdüse 14, im wesentlichen bestehend aus dem Düsengehäuse 15, einem Schmelzekanal 16 sowie einer Düsennadel 17., die in der Nadelverschlussdüse zwischen einer Offenstellung, in der die Schmelzeaustrittsöffnung 18 freigegeben ist und einer Geschlossenstellung, in der die Schmelzeaustrittsöffnung 18 verschlossen ist, verfahrbar ist. Das Düsengehäuse 15 ist nur an wenigen Punkten 19 in Kontakt mit der Formhälfte 8 und bildet im übrigen einen Ringspalt 20, so dass es gegenüber der Formhälfte 8 thermisch isoliert ist. Die für den ersten Spritzschritt vorgesehene Formnestoberfläche 28 der oberen Formhälfte 8 weist im Bereich des Kerns 10 ein oder mehrere Stege 29 auf, die von der Formnestoberfläche 28 in Schließrichtung abstehen und bei geschlossenem Spritzgießwerkzeug auf Anschlag mit der Stirnseite des Kerns 10 sind. Im übrigen ist die Formnestoberfläche 28 der Oberfläche des Grundkörpers entsprechend ausgebildet.

In der oberen Formhälfte 8 sind in der in Figur 2b gezeigten Werkzeughälfte im Bereich des Deckelrands eine oder mehrere Nadelverschlussdüsen 21 zum Einspritzen der Elastomerkomponente angeordnet. Bei der Herstellung von Eimerdeckeln 2 mit angespritztem Dicht- und Stapelring 3 hat es sich bewährt, zwei bis vier solcher Nadelverschlussdüsen über den Umfang verteilt einzusetzen. Der besseren Übersicht halber ist in den Figuren nur eine dieser Nadelverschlussdüsen eingezeichnet. Diese Nadelverschlussdüsen besitzen im wesentlichen ein Düsengehäuse 22, einen Schmelzekanal 23 sowie eine Düsennadel 24, die in der Nadelverschlussdüse zwischen einer Offenstellung, in der die Schmelzeaustrittsöffnung 25 freigegeben ist und einer Geschlossenstellung, in der die Schmelzeaustrittsöffnung 25 verschlossen ist, verfahrbar. Das Düsengehäuse 22 ist nur an wenigen Punkten 26 in Kontakt mit der Formhälfte 8 und bildet im übrigen einen Ringspalt 27, so dass es gegenüber der Formhälfte 8 thermisch isoliert ist. Die Formnestoberfläche 30 für den zweiten Spritzschritt ist der Oberfläche des Grundkörpers entsprechend ausgebildet. In dieser Oberfläche ist im Bereich des Dicht- und Stapelrings 3 eine umlaufende Nut 31 vorgesehen.

Die Arbeitsweise der erfindungsgemäßen Vorrichtung ist wie folgt:

Gemäß Figur 2a befindet sich der Kern 10 in seiner vorderen Stellung und die Stirnseite des Kerns 10 steht auf Anschlag mit den Stegen 29. In die so gebildete Kavität wird über die Nadelverschlussdüse 14 Schmelze eines thermoplastischen Kunststoffes eingespritzt und der Deckel 2 geformt. Im Bereich der Stege 29 wird ein Kanal 32 in dem Deckel 2 gebildet, der von der Oberseite zur Unterseite verläuft.

Wenn der Eimerdeckel 2 ausreichend abgekühlt ist, wird das Werkzeug geöffnet und die untere Formhälfte 7 um 180° gedreht, wobei die Drehachse rechts ausserhalb des in Figur 2a dargestellten Ausschnitts des Spritzgießwerkzeugs liegt. Der Deckel 2 ist in der unteren Formhälfte 7 nun so positioniert, dass der beim ersten Spritzschritt (Figur 2a) von dem Steg 29 erzeugte Kanal 32 auf der rechten Seite des in Figur 2b gezeigten Ausschnitts des Spritzgießwerkzeugs liegt. Zeitgleich oder anschließend wird der Kern 10 um eine kurze Strecke nach hinten verfahren, so dass zwischen der Stirnseite des Kerns 10 und der Unterseite des Deckels 2 eine untere Teilkavität entsteht. Diese bildet zusammen mit der Nut 31 und dem Kanal 32 eine kreisringförmige Kavität für den Dicht- und Stapelring 3.

Nach Schließen des Spritzgießwerkzeug kann die Nadelverschlussdüse 21 für die Elastomerkomponente freigegeben werden und der Dicht- und Stapelring 3 ausgeformt werden. Zeitgleich wird in der nunmehr freien Kavität des ersten Spritzschritts (Fig. 2a) der erste Spritzschritt wiederholt, d.h. Schmelze eines thermoplastischen Kunststoffs eingespritzt und der thermoplastische Deckel 2 ausgeformt.

Nach einer ausreichenden Verweil- und Aushärtzeit kann das Spritzgießwerkzeug erneut geöffnet werden, um einerseits den fertigen Deckel 2 mit dem angespritzten Dicht- und Stapelring 3 entnehmen zu können und um andererseits die unter Formhälfte erneut um 180° zu drehen. Der Spritzgußzyklus kann nun von neuem beginnen.

### Bezugszeichenliste

- 1: Eimer
- 2: Eimerdeckel
- 3: Elastomerischer Dicht- und Stapelring
- 4: U-förmiger Rand des Eimerdeckels
- 5: Wulst
- 6: Spritzgießwerkzeug bzw. Drehwerkzeug
- 7: Untere Formhälfte
- 8: Obere Formhälfte
- 9: Unteres Werkzeugmittelteil
- 10: Kern
- 11: Betätigungsstangen für den Kern
- 12: Abstreifer
- 13: Betätigungsstangen für den Abstreifer
- 14: Nadelverschlussdüse für die Thermoplastkomponente
- 15: Düsengehäuse der Nadelverschlussdüse 14
- 16: Schmelzekanal für die Thermoplastkomponente
- 17: Düsennadel der Nadelverschlussdüse 14
- 18: Schmelzeaustrittsöffnung für die Thermoplastkomponente
- 19: Kontaktpunkte der Nadelverschlussdüse 14
- 20: Ringspalt zwischen der Nadelverschlussdüse 14 und der Formhälfte 8
- 21: Nadelverschlussdüse für die Elastomerkomponente
- 22: Düsengehäuse der Nadelverschlussdüse 21
- 23: Schmelzekanal für die Elastomerkomponente
- 24: Düsennadel der Nadelverschlussdüse 21
- 25: Schmelzeaustrittsöffnung für die Elastomerkomponente
- 26: Kontaktpunkte der Nadelverschlussdüse 21
- 27: Ringspalt zwischen der Nadelverschlussdüse 21 und der Formhälfte 8
- 28: Obere Formnestoberfläche für den ersten Spritzschritt
- 29: Steg
- 30: Obere Formnestoberfläche für den zweiten Spritzschritt
- 31: Nut
- 32: Kanal

## Patentansprüche

1. Mehrkomponentiges Spritzgußteil, umfassend einen spritzgegossenen Grundkörper aus einer ersten Kunststoffkomponente sowie ein daran angespritztes Formteil aus einer zweiten Kunststoffkomponente,
**dadurch gekennzeichnet,**
**dass** sich das angespritzte Formteil zu einem ersten Teil auf einer ersten Seite und zu einem zweiten Teil auf einer zweiten Seite des Grundkörpers befindet, und dass der Grundkörper zwischen diesen beiden Seiten durchgehende Kanäle aufweist, wobei die Kanäle in den Bereichen aus dem Grundkörper austreten, in denen sich die Teile des angespritzten Formteils befinden und wobei die Kanäle mit der zweiten Kunststoffkomponente gefüllt sind, so dass zwischen dem ersten Teil und dem zweiten Teil des angespritzten Formteils eine Verbindung besteht.

2. Spritzgußteil nach Anspruch 1,
**dadurch gekennzeichnet,**
**dass** die beiden Seiten des Grundkörpers im wesentlichen eben ausgebildet sind oder einer festgelegten Kontur folgen.

3. Spritzgußteil nach Anspruch 1 oder 2,
**dadurch gekennzeichnet,**
**dass** die beiden Seiten des Grundkörpers im wesentlichen parallel zueinander liegen.

4. Spritzgußteil nach einem der Ansprüche 1 bis 3,
**dadurch gekennzeichnet,**
**dass** der Grundkörper aus einem thermoplastischen Material und das angespritzte Formteil aus einem Elastomer besteht.

5. Spritzgußteil nach einem der Ansprüche 1 bis 4 ,
**dadurch gekennzeichnet,**
**dass** es sich bei dem Grundkörper um einen Deckel für einen Behälter handelt und dass das angespritzte Formteil im Randbereich des Deckels vorgesehen ist, insbesondere als umlaufender Ring, wobei das untere Teil des angespritzten Formteils ein Dichtring und das obere Teil des angespritzten Formteils ein Stapelring ist.

6. Verfahren zur Herstellung eines Spritzgußteils gemäß einem der vorstehenden Ansprüche,
**dadurch gekennzeichnet,**
**dass** in einem ersten Spritzschritt ein Grundkörper aus der ersten Kunststoffkomponente geformt wird, der einen oder mehrere von einer ersten Seite des Grundkörpers zu einer zweiten Seite des Grundkörpers durchgehende Kanäle aufweist, dass anschließend auf diesen beiden Seiten des Grundkörpers Formnester mindestens in den Bereichen gebildet werden, in denen die Kanäle aus dem Grundkörper austreten, und dass in einem zweiten Spritzschritt auf einer der beiden Seiten die zweite Kunststoffkomponente angespritzt wird, wobei das Einspritzen in die Formnester an den Stellen erfolgt, an denen die Kanäle aus dem Grundkörper austreten.

7. Verfahren nach Anspruch 6,
**dadurch gekennzeichnet,**
**dass** auf einer oder beiden Seiten des Grundkörpers durchgehende und alle Kanäle überdeckende Formnester gebildet werden.

8. Verfahren nach Anspruch 7,
**dadurch gekennzeichnet,**
**dass** im ersten Spritzschritt ein Deckel für einen Behälter geformt wird, der in seinem Randbereich über den Umfang verteilt ein oder mehrere, zwischen der Oberseite und der Unterseite des Deckels verlaufende Kanäle aufweist, und dass in dem zweiten Spritzschritt ein Dicht- und Stapelring an den Deckel angespritzt wird.

9. Verfahren nach einem der Anspruch 6 bis 8,
**dadurch gekennzeichnet,**
**dass** im ersten Spritzschritt ein thermoplastischer Kunststoff für den Grundkörper eingespritzt wird und dass im zweiten Spritzschritt ein Elastomer eingespritzt wird.

10. Vorrichtung zur Durchführung des Verfahrens nach einem der Ansprüche 6 bis 9, mit einer Schließeinheit, mit zwei Einspritzheiten sowie mit einem in der Schließeinheit aufgespannten Spritzgießwerkeug, umfassend eine erste Formhälfte und eine zweite Formhälfte,
**dadurch gekennzeichnet,**
**dass** die erste Formhälfte ein erstes Formnest aufweist, in dem ein oder mehrere von der Formnestoberfläche in Schließrichtung weisende Stege vorgesehen sind, dass in der zweiten Formhälfte ein erstes Formnest vorgesehen ist, das mit dem ersten Formnest der ersten Formhälfte zu einer ersten Kavität zusammenfahrbar ist und dessen Formnestoberfläche im Bereich der Stege auf Anschlag mit diesen Stegen gebracht werden kann, dass in beiden Formhälften zweite Formnester vorgesehen sind, die im zusammengefahrenen Zustand eine zweite Kavität bilden können, die zur Aufnahme des in der ersten Kavität geformten Grundkörpers geeignet ist, dass die Formnestoberflächen der beiden zweiten Formnester wenigstens im Bereich der durch die Stege in dem Grundkörper erzeugten Kanäle von der Oberfläche des Grundkörpers beabstandet sind und dass im Bereich einer oder mehrerer dieser Kanäle Einspritzstellen für die zweite Kunststoffkomponente vorgesehen sind.

11. Vorrichtung nach Anspruch 10,
**dadurch gekennzeichnet,**
**dass** als Spritzgießwerkzeug ein Drehwerkzeug vorgesehen ist, in dessen sich nicht drehender Formhälfte das erste Formnest mit den Stegen für die erste Kavität und das zweite Formnest für die zweite Kavität vorgesehen sind, dass in der sich drehenden Formhälfte zwei identische Formnester mit je einem verschiebbaren Kern vorgesehen sind, wobei sich der Kern im vorgefahrenen Zustand auf Anschlag mit den Stegen des ersten Formnestes befindet und wobei der Kern im zurückgefahrenen Zustand von der Oberfläche des Grundkörpers beabstandet ist.

12. Vorrichtung nach Anspruch 11,
**dadurch gekennzeichnet,**
**dass** in der sich drehenden Formhälfte zur Bildung der beiden Formnester jeweils ein zylindrisches Werkzeugmittelteil und ein dieses umgebender Kern von im wesentlichen hohlzylindrischer Gestalt vorgesehen sind.

13. Vorrichtung nach Anspruch 12,
**dadurch gekennzeichnet,**
**dass** die Kerne konturumlaufend ausgebildet sind.

14. Vorichtung nach einem der Ansprüche 10 bis 13,
**dadurch gekennzeichnet,**
**dass** zum Einspritzen der zweiten Kunststoffkomponente eine oder mehrere Nadelverschlussdüsen vorgesehen sind, die derart in den Formhälften angeordnet sind, dass sich die Düsenspitze an den Stellen befindet, an denen die Kanäle aus dem Grundkörper austreten.

15. Vorrichtung nach Anspruch 14,
**dadurch gekennzeichnet,**
**dass** die Düsennadel der Nadelverschlussdüsen aus dem Düsengehäuse heraus verfahrbar ist.
